# EUROPEAN PATENT APPLICATION

(11) **EP 4 485 313 A1**
(43) Date of publication of application: **01.01.2025**
(21) Application number: 23020320.0
(22) Date of filing: 30.06.2023
(51) Int. Cl.: G06Q 20/06, G06Q 20/22, G06Q 20/36, G06Q 20/38, G06Q 20/40

(54) **SECURE ELEMENTS AND METHOD FOR MANAGING OF DIFFERENT TYPES OF ELECTRONIC TOKEN**

(71) Applicant: Giesecke+Devrient advance52 GmbH, 81677 München (DE)
(72) Inventor: Mantri, Deepen, 81677 München (DE); Zeller, Peter, 81677 München (DE); Hupel, Lars, 81677 München (DE); Alfert, Klaus, 65760 Eschborn (DE); Rafiee, Makan, 45219 Essen (DE)
(74) Representative: Giesecke+Devrient IP

(57) **Abstract**

The present invention relates to a secure element for providing electronic second-type tokens, wherein the secure element comprises an electronic first-type token having a monetary value. The secure element for providing to a second secure element an electronic second-type token having a defined monetary value is configured to:
generate an electronic second-type token based on the electronic first-type token, wherein the monetary value of the generated electronic second-type token is equal to the monetary value of the electronic first-type token;
split the generated electronic second-type token into two or more electronic second-type tokens, a split electronic second-type token of the split electronic second-type tokens having the defined monetary value; and
send to the second secure element the split electronic second-type token having the defined monetary value.

## Description

The invention relates to a secure element for providing electronic second-type tokens, wherein the secure element comprises an electronic first-type token and a corresponding method. The invention further relates to a secure element for exchanging electronic second-type tokens and to a token register for registration of different types of electronic token in an electronic payment transaction system. The invention also relates to the electronic payment transaction system.

Token may be electronic data sets representing central bank digital currency, short CBDC. These tokens are preferably issued by a central bank.

Payment transactions and associated payment transaction data must be safe and secure and so, means for protecting confidentiality, integrity, and availability of exchanged payment transaction data must be implemented.

For electronic tokens (= also referred to as digital assets, electronic coins, coin data sets) it must be possible to demonstrate basic control functions, specifically (1) detection of multiple spending attempts, also called double-spending, and (2) detection of uncovered payments. In case (1), someone attempts to issue the same coin data set multiple times, and case (2), someone attempts to issue a coin data set even though they have no credit (left).

In WO 2020/212 337 A1; WO 2020/212 331 A1; WO 2021 /170 646 A1 and WO 2021 / 170 645 A1, electronic payment systems are described in which tokens can directly be shared between individual payment system participants. The token transferred within such electronic payment system is hereinafter referred to as first-type token (or value notes) and is valid upon direct receipt from another participant without a need of approval or verification via an online connection. Tokens can be modified by each individual participant, e.g., ownership of tokens can be switched from one participant to another participant (SWITCH modification), tokens can be split into plural tokens to reduce a monetary value (SPLIT modification) and/or tokens can be merged to become one token having a higher monetary value (MERGE modification).

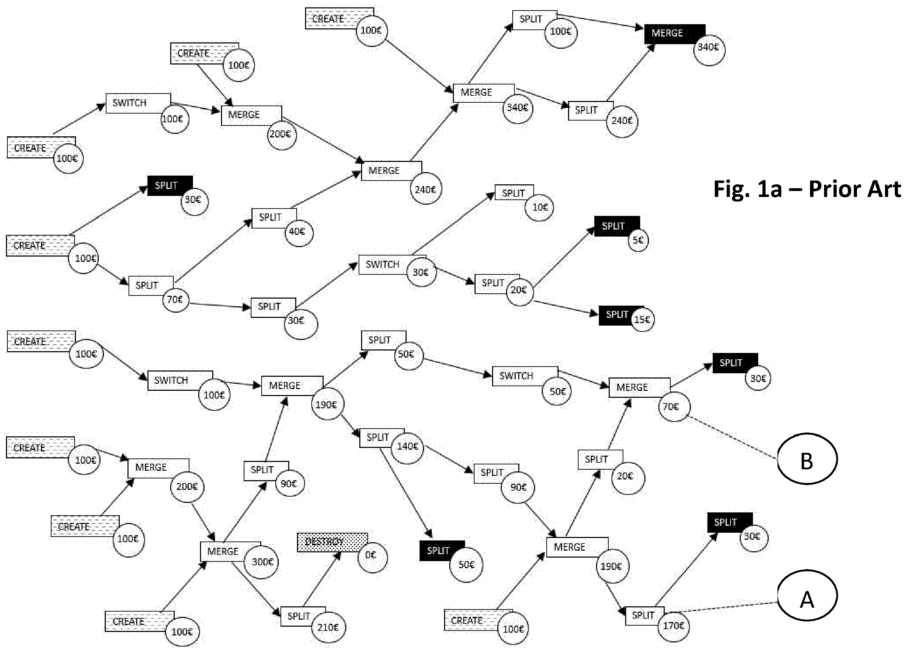

Exemplary modifications in lifetimes of such first-type tokens within the known electronic payment transaction systems are illustrated in Fig. 1a. Here, eight first-type tokens (see dash-lined fillings) are created by an issuer instance, such as a central bank and one first-type token (see dotted filling) is destroyed by the issuer instance.

In the lifetime, these first type tokens are further modified by secure elements of the transaction system, namely these first-type tokens were either split into two first-type tokens each having less value than its origin or merged for increasing their value or switched to change ownership of that token.

Each modification to such a first-type token can be - but does not have to be - registered in a verification register, hereinafter also referred to as token register or verifier. This token register stores token references of the first-type token but does not store the token itself to ensure anonymity in the payment system.

The token register is an entity of the electronic payment transaction system but is remote to participants. Thus, the token register may be reached via an online connection, e.g., an internet communication and/or well-established protocols, such as TCP, IP, UDP, HTTPS, FTP and/or other suitable communication protocols.

One design aspect of these known payment systems is that a first-type token must be verifiable by each participant in the system at any time. This can be done online to the token register upon sending a registration command from the participant (secure element).

Valid first-type tokens that are registered in the token register (also referred to as active tokens) are highlighted with a black filling in the exemplary scenario of Fig. 1a, here a total of seven first type tokens. First-type tokens that are already further modified become invalid tokens (also referred to as inactive tokens) and these invalid tokens are either deleted in the token register or are marked as invalid in that token register, illustrated as tokens without a filling in Fig. 1a.

If an online connection is not available or inconvenient or should not be used for a payment transaction, it is still possible to use a modified token in the payment system (offline). This is possible, because first-type tokens may have a token history that is attached to the token. This token history data protocols modifications that are made without registration in the token register.

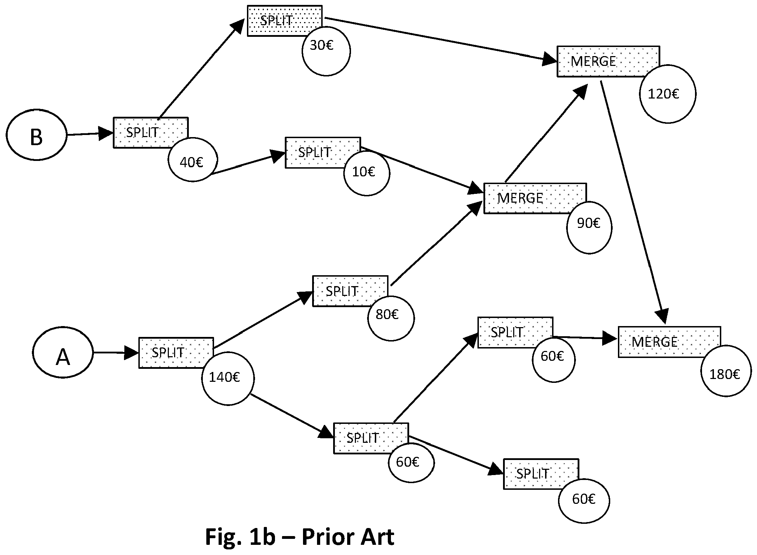

Fig. 1b shows exemplary offline transactions performed on two first-type tokens of Fig. 1a (note the connection "A" and "B") according to the prior art. Each of these modifications shown in Fig. 1b is not registered in the token register. These first-type tokens, not being registered in the token register are highlighted with a dotted filling which are all tokens as shown in Fig. 1b.

To proof validity of these first-type tokens of Fig. 1b, it is necessary to generate and attach a token history entry for each modification made with that token in all cases in which an online registration operation of that modification at the token register, e.g., via an online connection to the token register, is unavailable or inconvenient or should not be used at the time of the modification. Such a token history may have one or more token history entries each being referred to one modification of the token. A token history entry can also be referred to as a "proof" hereinafter.

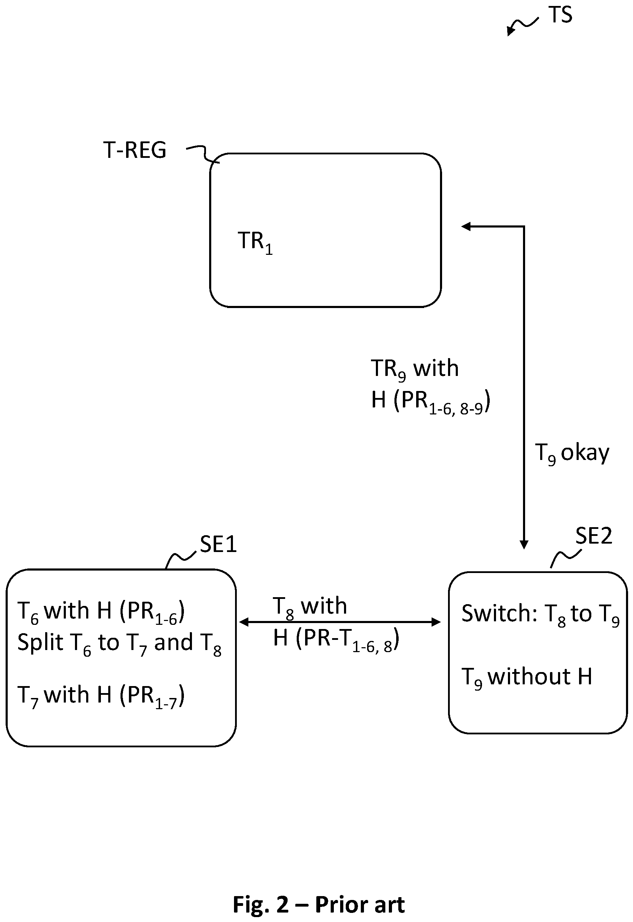

Fig. 2 illustrates a schematic of an exemplary prior art electronic payment transaction system TS comprising two secure elements SE1, SE2 and a token register T-REG. A first secure element SE1 may manage a token T₆. This token T₆ has a token history H. This token history H relates to six previously performed modifications and consequently it has six token history entries (e.g. six proofs PR₁₋₆) each being referred to one of those six modifications. These modifications can be made prior or after individual payment transactions performed by the modified token(s). It is irrelevant whether the first secure element SE1 received the token T₆ in a previous transaction from another secure element or whether it was involved in some or all of the six modifications that result in the token T₆. The first secure element SE1 now e.g. wants to perform a split operation to token T₆ to obtain tokens T₇ and T₈ to pay with the resulting token T₈ having a monetary value needed to fulfil a payment. This split operation is the seventh modification of the token. Token T₇ would remain in the sphere of the first secure element SE1 with now seven token history entries H (PR₁₋₇). Token T₈ is transmitted to a second secure element SE2 with now seven token history entries H (PR₁₋₆, ₈). To verify the validity of the token T₈, the second secure element SE2 can no perform a switch of ownership operation to obtain a token T₉. This switch-operation is the ninth modification related to this token. To register this token T₉, the second secure element SE2 may perform a registration operation including generating a token reference to be validated by the token register T-Reg. Positive registration feedback from the token register T-Reg leads to token T₉ that does not have any token history H - meaning, the token history H related to the previous modifications can be deleted entirely, since T₉ is now registered.

The larger the token history is - meaning the more token history entries (modifications related to a specific token) are attached to or stored with the token itself - the more storage space and computing performance is necessary for storing, managing and/or transmitting/receiving an individual token.

Furthermore, since more data needs to be processed and transmitted between individual participants, the time duration for performing a token transfer heavily increases and may lead to unwanted time-out scenarios, e.g. in wireless local payment transaction between secure elements and/or user acceptance is lowered.

Since a secure element is a computing device with limited resources such as storage capacity and processing power, there is a need to reduce the data size of a token or at least to avoid a further increase of the data size in offline transaction without reducing security, flexibility, or anonymity of the electronic payment transaction system, especially in scenarios in which an online connectivity to a token register cannot or should not be established.

The payment transaction should still be designed to be secure and simple. A direct and anonymous payment between secure elements should be established. Modifications at the token for flexible payments must still be made possible also in direct offline payment transactions. It must be allowed to each system participant to perform basic checks, namely (1) detecting multiple spend attempts and (2) detecting attempts to pay with non-existent monetary amounts.

The above-identified objectives are solved with the features of the independent patent claims. Further advantageous embodiments are described in the dependent patent claims.

In an aspect of the present invention there is a method performed in a first secure element of an electronic payment transaction system, comprising the steps of:
splitting , by the first secure element, an electronic token having a monetary value into two or more electronic tokens, wherein the monetary value of the electronic token is equal to the sum of monetary values of the two or more electronic tokens;
sending, by the first secure element, one of the two or more tokens to a second secure element of the electronic payment transaction system.

The secure element generating an electronic second-type token based on an electronic first-type token, wherein the electronic first-type token is managed by the first secure element and is ready-to-be-used in the electronic payment transaction system, and wherein the monetary value of the generated electronic second-type token is equal to the monetary value of the electronic first-type token; and wherein, in the step of splitting, the generated electronic second-type token is split into (the) two or more electronic second-type tokens.

When generating second-type token, the monetary value of the electronic second-type tokens equals to the monetary value of the electronic first-type token. So, it can be assured that no additional money is generated in the electronic payment system, and it is also assured that no money is destroyed in the electronic payment system. Generating and destroying of money (monetary values for a token (of any kind or type)) cannot be performed by a secure element (of a participant) in the electronic payment system. As a security design rule, these two functions should only be performed by a secure element of a central issuance unit, such as a central bank.

The method is designed so that a monetary value (as a token element) that is part of a second-type token is not existing as monetary value in the first-type token from which the second-type token is based.

One technical advantage is that second-type tokens can be split (and merged) more easily compared to first-type tokens. In particular it can be performed without recording such modifications, e.g., as proofs attached to the tokens. So, a second-type token does not increase its data size, in other word, it does not grow in data size.

Electronic tokens used within the electronic payment transaction system are classified into different types of tokens, here into at least an electronic token of a first-type (first-type token, also referred to as value note) and an electronic token of a second type (second-type token, partly also referred to as root note).

The method of managing of different types of electronic tokens includes the transformation of a first-type token into a second-type token, hereinafter also referred to as generating or planting of the second-type token. This method of managing of different types of electronic tokens also includes the retransformation of one or more second-type token into a first-type token, hereinafter also referred to as harvesting or redeeming of second-type token.

According to this method, each second-type token is based on (originated from) one first-type token.

Each type of token comprises a monetary value as a first token element. The monetary value may be a data element that represents money usable in one or more electronic payment transaction.

Each type of token further comprises a private value as a second token element. The private value may be referred to as a blinding value (e.g. obfuscation amount) or may be a random number or may be a secret that is not known to participants not involved in a transaction. The private value may be a private element of a token element pair. A corresponding public element of such a token element pair may be used as an element in a token reference that is stored in a token register to register first-type tokens and second-type tokens.

In preferred variants electronic second-type tokens comprise a private value and a monetary value, wherein the generated second-type token and the two or more split electronic second-type tokens include the same, thus shared, private value. Electronic first-type tokens may comprise a private value and a monetary value, wherein a first-type token includes an unique private value.

In addition, each type of token may have further token elements as outlined below and may also have further token elements such as further metadata, e.g., currency data that indicates the currency which the monetary amount represents and/or validity data and/ or timestamp data.

In embodiments the first secure element provides (and sends) a registration request for registering the generated electronic second-type token in a token register of the transaction system. Electronic first-type tokens are individually registered in the token register of the transaction system. Hence, each first-type token managed by a participant, e.g. participant secure element or wallet, is separately registered. For example, a unique token reference could derived from the unique private value of the first-type token. The two or more split electronic second-type tokens, and any further electronic second-type tokens split based thereon (on these two or more), share a common registration in the token register of the transaction system. Hence, for a registered second-type token, multiple splits may be performed without a need for registration and/or multiple participants, such as secure elements, of the system may own a second-type token sharing the common registration. Since the monetary value of the second-type tokens sharing the common registration (due to the respective splitting) is a partial monetary value of the monetary value of the registration, second-type token could be called partial value tokens.

Preferably, in a step of splitting the electronic second-type token is copied and only the monetary value of the (now) two (or more) second-type tokens is changed. Of course, the sum of the monetary values of the split second-type tokens corresponds to the monetary value of the one, e.g. generated, previous second-type token. Accordingly, the two or more split electronic second-type tokens correspond to copies of the generated electronic second-type token, however each of them having a respectively split monetary value. Thus splitting is simplified, particularly increased in speed. Moreover, the data size of electronic second-type token remains constant upon splitting. Split electronic first-type tokens may comprise generated individual data (generation time required) and/or additional data (data size grows) as well as a respectively split monetary value.

Furthermore, electronic second-type tokens may simplify a step of merging tokens. This advantage is particularly relevant for secure elements. If an electronic second-type token is received by a participant, e.g. in a secure element, which shares a registration (and/or the same private value and/or public value) with an existing electronic second-type token of the participant, they can be merged easily. Preferably, only the monetary value of the existing electronic second-type token has to be changed (to the sum of both monetary values).

In particular only second-type tokens originating from one and the same generated second-type token can be combined (merged) within a secure element. Furthermore, second-type tokens originated from different generated second-type token cannot be merged within a secure element. Considering the limited memory space within a secure element or in order to reduce memory size required for tokens, the number of second-type tokens inside a secure element should be within a range of 1 to 30 or preferably in a range of 1 to 20.

In preferred embodiments the number of generated electronic second-type tokens generated is limited (in order to limit the number of shared registrations used in the transaction system and/or in an area of the transaction system). For example, the number of electronic second-type tokens generated by the first secure element per year is below 100, preferably below 20, most preferably below 10.

Furthermore, preferably only the monetary value and its coding in second-type tokens limits the possible number of splits and/or the possible number of electronic second-type tokens sharing a common registration. For example, if the monetary value is coded without decimal places a monetary value of 100 (coding "100") allows 99 splits and/or 100 tokens sharing the registration, whereas, if the monetary value is coded with 2 decimal places, a monetary value of 100 (coding "100,00") allows 9999 splits and/or 10000 tokens sharing the registration. In preferred embodiments the number of split electronic second-type tokens (including subsequent splits of participants) sharing a common registration is above 500, preferably above 1000, most preferably above 2000.

It is advantageous to generate in the first secure element second-type token(s) having a very high monetary value compared to the monetary value send to the second secure element. The monetary value of the electronic second-type token send to the second secure element preferably is less than 1/500, preferably less than 1/1000, most preferably less than 1/2000, of the monetary value of the generated electronic second-type token. The monetary value of the generated electronic second-type token may be above a monetary value limit for transactions with first-type electronic tokens in the transaction system and/or above a monetary value limit for transactions with second-type electronic tokens in the transaction system(e.g. only: transaction limit 100/200/500 versus generated values 10 000/20 000/ 50 000, being above this limit).

The number of first type-tokens registered in the token register reflects the overall number of first type-tokens currently active in the payment system (since first type-tokens are individually registered). Contrary thereto, it should now be apparent that the number of registered second type-tokens registered in the token register does not reflect the overall number of second type-tokens currently active in the payment system (since second type-tokens share registrations).

In variants each generated second-type token comprises an area code data as a further token element, wherein the area code data represents one predefined geographic region (out of multiple geographic regions) of the electronic payment transaction system. Preferably each electronic second-type token further comprises a time data as further token element, wherein an automated transmitting of the electronic second-type token to the service provider unit is initiable based on the time data and/or the area code data.

The first-type token may also be referred to as value note within this disclosure. In order to highlight a difference to partial value tokens, they could also be called full value tokens. The first-type token can be used in online and offline payment transactions. The first-type token may represent central bank digital currency, CBDC.

The first-type token may comprise one or more token-individual history entries as a further token element. One history entry may represent one modification, such as SWITCH, SPLIT, MERGE, performed with this first-type token. Such a further token element may also be referred to as history data. Problematic with this history data is the fact that each further modification to a first-type token is recorded as a history entry as part of the first-type token data as long as this first-type token is not registered in a token register using an online connection.

The second-type token may also be referred to as root note within this disclosure (or partial value token). The second-type token can be used in both, online and offline electronic payment transactions. The second-type token may represent central bank digital currency, CBDC.

It is most preferred that electronic second-type tokens are dedicated for use in only one or two specific use cases, particularly for use in offline transactions and/or for use in smart contracts. Particularly, second-type tokens would be exclusively in offline electronic payment transactions between two directly communicating secure elements within the electronic payment transaction system. In such a case, second-type tokens may not be used in online electronic payment transactions.

Upon receipt of a second-type token in a secure element, the secure element checks whether there are existing second-type token. Second-type tokens originated from one and the same first-type token may be combined (merged) within a secure element. However, two or more second-type tokens each originated from a different first-type token/generated second-type token cannot be combined in this electronic payment transaction system.

In a preferred embodiment, a second-type token is characterized in that it does not comprise history data as a further token element. However, it may be necessary that the second-type token comprises the history data of the first-type token from which the second-type token is generated from. In any case, during direct electronic payment transactions between secure elements, either in an offline electronic payment transaction or in an online electronic payment transaction, a further modification (merge, split) of a second-type token is not recorded as a history date entry and so, the data size of a second-type token is not increased throughout the payment transaction in which this second-type token is used.

An online electronic payment transaction payment is defined herein as a transaction in which a secure element that participates in the transaction, e.g. the secure element that initiates the token transfer (payer) or the secure element that receives a token (payee), has access and can communicate with one or more remote instances of the transaction system, such as a token register, a transaction register, a token issuance unit and/or a service provider unit, such as financial service provider (FSP) via classical internet or mobile communication means or any other suitable online communication protocol. So, immediately before, while or after performing the transaction, also a registration of the transaction, e.g. by storing a respective token reference in a remote token register, is performed by one of the secure elements involved in the transaction.

An offline electronic payment transaction payment is defined herein as a direct transaction between two secure elements that participate in the transaction, e.g. the secure element that initiates the token transfer (payer) and/or the secure element that receives a token (payee). At least one of payer or payee has no access and cannot communicate with remote instances of the transaction system, such as a token register, a transaction register, a token issuance unit and/or a service provider unit, such as financial service provider (FSP) via classical internet or mobile communication means. The token transfer may then take place by local wireless communication means, such as Bluetooth, NFC, or any other suitable wireless communication protocol. The token transfer may also take place by contact-based communication means, such as USB, ISO 7816, or any other suitable contact-based communication protocol.

In a preferred embodiment, one or more first-type token may be managed by the secure element. In such a case, the secure element may send an electronic first-type token via an online payment transaction. If this secure element has no access to or cannot communicate or via an online payment transaction (also in case a user of the secure element does not want to use an online payment transaction), the secure element may perform the managing method to obtain one or more second-type token that are used in an offline payment transaction.

In another preferred embodiment, one or more first-type token and one or more second-type token may be managed by the secure element. In such a case, the secure element may send an electronic first-type token via an online payment transaction. If this secure element has no access to or cannot communicate or via an online payment transaction (also in case a user of the secure element does not want to use an online payment transaction), the secure element may send one or more electronic second-type token via an offline payment transaction.

In the generating step, more than one electronic second-type token may be generated. In this case, the private token elements will be different in all generated electronic second-type tokens. Only for split second-type tokens the private token element may be the same (the registration shared). As a design-rule, no additional (token-individual) private elements may be inserted in a second-type tokens in the splitting step.

Using a second-type token in an electronic payment system reduces memory space required to store second-type token(s) in a secure element and also reduces duration time for performing a payment transaction due to less data that needs to transferred between transaction participants (such as secure elements that directly exchange the second-type token).

In a splitting step, two or more electronic second-type token will be generated. A sum of the monetary values of the split electronic second-type tokens (from the current split) equals to the monetary value of the pre-existing electronic second-type token. So, it can be assured that no additional money is generated in the payment system and it is also assured that no money is destroyed in the payment system. Generating and destroying of monetary values for a token (of any kind or type) cannot be performed by a secure element of a participant in the payment system. Such functions can only be performed by a central issuance unit, such as a central bank.

The private token element of the electronic first-type token could be used as the private token element in the one or more generated electronic second-type token. So, the origin of the second-type token (namely its origin from the one first-type token) could be followed. In case of a reconciliation of a second-type token it is possible to check the validity of the second-type token. Preferably however, a new and/or independent private token element is created in the step of generating for the generated electronic second-type token.

Each electronic token may further comprise a type data as a further token element. The type data represents an information that classifies the token into either a first-type token or into a second-type token. In the generating step, only this type data may be changed from a first-type data - being information to classify a token as first-type token - to a second-type data - being information to classify a token as second-type token - to generate the one or more electronic second-type token.

The electronic first-type token may be registered in a token register of the electronic payment transaction system prior the generating step. So, the first-type-token is ready-to-be-used in either an online or an offline payment transaction within the electronic payment transaction system.

Each generated second-type token may comprise an area code data as a further token element. The area code data represents one predefined geographic region of the electronic payment transaction system. Optionally, each generated second-type token is only valid for electronic payment transactions within the predefined geographic region.

In case, there is one or more second-type token (originated from different generated second-type tokens) managed by a secure element, a negotiating step may be performed between a first (participant) secure element and a second (participant) secure element prior a sending step of a second-type token, to ensure that one or more second-type token is transferred to the second secure element that can be combined with another second-type token (originated from the same generated second-type token) in the second secure element, if such a second-type token is managed by the second secure element.

In the generating step, only one electronic second-type token may be generated in the generating step and immediately prior the sending step, this one generated electronic second-type token is further split into two second-type tokens out of which one split second-type token is send to the second secure element. This sent split second-type token (send in the sending step to the second secure element) may comprise a monetary value that is much smaller than the monetary value of the electronic first-type token from which the second-type token is originated from, preferably at least 10000 times smaller, more preferably at least 1000 times smaller, more preferably at least 100 times smaller. So, monetary value of a second-type token is much lesser than the monetary value of the first-type token from which the second-type token is originated from, which increase security in the payment transaction system.

Preferably, a registration of the generated second-type token in the token register is performed after the generating step and before the sending step.

Each generated second-type token may comprise an area code data as a further token element, wherein the area code data represents one predefined geographic region of the electronic payment transaction system and wherein each generated second-type token is only valid for electronic payment transactions within the predefined geographic region. So, the number of second-type token used in the payment system can be limited to specific areas, such as a village or town area.

The area code data may be additionally stored in an area code ring buffer of a service provider unit. The service provider unit may check whether the area code is still valid and may request the secure elements to automatically return (reconcile, redeem) second-type token having area codes in which the secure element is currently not located in. This ensures that a number of second-type token in a payment system remains small and reasonable within an area code (e.g. a village or town) and second-type token are returned, if a secure element is outside the geographic region defined by this area code. In an implementation, a buffer entry may be stored and determined in a ring buffer of the service provider unit and the secure element may be forced to send all second-type token to the service provider unit before second-type token of the current area code can be generated and send to the secure element. This may be performed independent on the fact whether such second-type token indeed exist on the secure element or not.

Each second-type token may also comprise time data as a further token element. An automated transmitting of the second-type token to the service provider unit may be initiated based on the time data and/or the area code data. E.g., if one or more second-type token within a time frame managed by a secure element, second-type token outside this time frame and/or outside this area code may be automatically retransformed (reconciled) as described below.

The second-type token may comprise a private value token element of a token element pair and wherein a token reference stored in the token register comprises a public token element of the token element pair. In an implementation, the private token element and the public token element are identical and are a random number generated by the first secure element, preferably by the secure element of the service provider unit.

The private value token element may be a private key of a cryptographic key pair and a public token element of a token reference stored in the token register may be the corresponding public key of the cryptographic key pair.

The private value token element and the public token element may be identical and may be the result of a Hash-based Message Authentication Code, HMAC, function on the monetary value of the first-type token, the HMAC-function being performed by the token register. In this case, the token register has knowledge about a required symmetrical key and the monetary value of the first-type token from which the second-type token are derived from.

The method may comprising the further steps of generating, by the first secure element or the second secure element, a token reference of the electronic second-type token; and sending the generated token reference to the token register for registering the second-type token, wherein sending of the token reference is preferably made with a dedicated command, e.g. a so-called plant command.

The token reference may comprise the monetary value of the first-type token and a public value as two distinct token reference elements, wherein the public value is either the private value of the second-type token or is a public key of an asymmetric cryptographic key pair, the private key being the private value of the second-type token.

For a registration of a generated second-type token in the token register, a token reference of this second-type token may be generated. Token references for second-type token may also be referred hereinafter as planted notes. Token references for second-type token may preferably be generated by the first secure element, e.g., the secure element of the FSP unit, after generating the second-type token but prior the splitting and/or sending to a second secure element.

Each token reference of a second-type token comprises a public value as well as a monetary value as two distinct token reference elements.

In one embodiment, the public value as a token reference element may be a public key of an asymmetric cryptographic key pair, wherein the private value of the second-type token is the private key of the asymmetric cryptographic key pair. In this embodiment, the private value and the public value are considered as a token element pair. Generation of this token element pair is made by means of the first secure element, e.g. a private value is a random number generated by a true random number generator of the secure element and the public value is generated by means of a cryptographic function performed by the secure element.

In another embodiment, the public value as a token reference element may be the private value of the second-type token. In this embodiment, the private value and the public value are identical, e.g. a random number. Generation of this public value is made by means of the first secure element, e.g. a true random number generator.

In still another embodiment, the public value as a token reference element may be the private value of the second-type token. In this embodiment, the private token element and the public token element are identical and may be the result of a Hash-based Message Authentication Code, HMAC, function on the monetary value of the token reference performed by the first secure element. A symmetrical key for performing this HMAC-function may only be known by the token register and so, the token register shares this public value with the first secure element prior generation of the token reference.

The token reference for the second-type token also comprises a monetary value as a distinct token reference element. This monetary value may be the monetary value of the first-type token from which the one or more second-type token is originated from. In case, just one second-type token is generated in the generating step, the monetary value of the second-type token may be used as monetary value for the token reference, because both monetary values are equal.

Regenerating (also referred to as reconciliation, retransformation or redeeming) of these second-type token can be performed by each secure element in the transaction system. Therefore, the secure element may generate a first-type token based on a second-type token and a token reference of the (re-)generated first-type token.

The token reference of the (re-)generated first-type token is sent to the token register together with the token reference of the registered second-type token. Such a request is partly called, a partial value request, herein, since the monetary value (of the first-type and/or the second-type token) in the request corresponds to only a partial value of the monetary value registered for the second-type token. The token register identifies that the token reference of the second-type token send corresponds to a token reference (of a second-type token) registered in the token register. Then, the register reduces the monetary value of the corresponding registered token reference of the second-type token by the monetary value sent. Additionally, the sent token reference of the first-type token is stored in the token register for the same monetary value sent. Thus, the generated first-type token is valid in the transaction system and can be used for further online or offline electronic payment transactions.

According to another aspect of the present invention, a secure element for providing electronic second-type tokens is provided. The secure element comprises an electronic first-type token having a monetary value. The secure element - for providing an electronic second-type token of a defined monetary value to a second secure element - is configured to:
generate an electronic second-type token based on the electronic first-type token, wherein the monetary value of the generated electronic second-type token is equal to the monetary value of the electronic first-type token;
split the generated electronic second-type token into two or more electronic second-type tokens, a split electronic second-type token of the split electronic second-type tokens having the defined monetary value; and
send to the second secure element the split electronic second-type token having the defined monetary value.

The second secure element may be a participant secure element in the transaction system. The secure element may be a provisioning secure element in the transaction system. It may be adapted as described above (for the first secure element). For example only, it could include multiple first-token values (with very high monetary values - see above) for providing second-type tokens to participant secure elements of the transaction system.

The provisioning secure element can be a provisioning secure element of a service provider unit in the transaction system. After having generated and split a second-type token, the secure element is preferably configured to use the previously split electronic second-type token to provide electronic second-type tokens to further secure elements of the transaction system, by respectively splitting the previously split electronic second-type token and sending the further split electronic second-type token to a further secure element. Typically, only if the defined monetary value is higher than the monetary value of the split electronic second-type token managed in the provisioning secure element (or if this monetary value is under a certain predefined threshold), the secure element would generate a second-type token again.

According to another aspect of the present invention, a (participant) secure element for exchanging electronic second-type tokens is provided.

The secure element being configured for
splitting one second-type token into two or more second-type tokens, wherein the private values in the two or more second-type tokens are identical to the private value of the second-type token, or
merging one or more second-type token with another second-type token managed by the secure element and having an identical private value into a merged second-type token; and
transmitting, by the secure element, the split or merged second-type token to a second (participant) secure element.

The secure element being alternatively or in addition configured for regenerating a first-type token based on a second-type token, both having the same monetary value. The secure element may send a partial value request (or redeem request) to the token register, the request referring to the re-generated first type token and to the second-type token and including the monetary value. The request may e.g. include both token references/public values.

As indicated above the second-type token may be exclusively used in the transaction system/by the participant secure element for a dedicated use case, offline transactions and/or smart contracts. Accordingly, first-type tokens would be used in first (and second) use cases, but second-type tokens would only be used in the second use case.

Upon receiving of the electronic second-type token in the second secure element, the second secure element may compare the private value token element of the receipt electronic second-type token with a private value token of electronic second type token element managed by the second secure element, wherein the monetary value of the received electronic second-type token is added to the monetary value of the electronic second-type token managed by the second secure element (and is thereby merged), if the private values are identical.

In a preferred embodiment the method further comprises the performing of a negotiation step between the first secure element and the second secure element to identify whether each of the first secure element and the second secure element comprise one or more second-type token having at least one an identical token element, wherein a token element preferably is one or more of the following items: a private value; an area code; a time data; and/or a short-ID data.

A short-ID data may be a token element generated by the first secure element during the generation of the second-type token to quicker identify the origin of the second-type token.

In an aspect of the present disclosure, there is a provided a token register for registering tokens of an electronic payment transaction system. The token register registers electronic first-type tokens and electronic second-type tokens of the electronic payment transaction system. The token register stores a monetary value for a registered token (of the first/ second-type tokens). For a registered electronic first-type token the token register only accepts full value requests, the full value request including the monetary value of the registered electronic first-type token. For a registered electronic second-type token the token register accepts a partial value request, the partial value request including a requested partial monetary value, and the token register reduces the monetary value of the registered electronic second-type token by the requested partial monetary value.

Accordingly, the token register will not accept a partial value request for registered electronic first-type token. Upon receiving a first-type token replacement request for one or more registered electronic first-type token(s), being a full value request, the token register may replace the registration of the registered electronic first-type token(s) by a registration of one or more requested electronic first-type token(s). Such replacement requests have been described in the prior art and can be e.g. used to register a switch, split or merge of tokens.

Upon receiving a second-type token generation request for a registered electronic first-type token, being a full value request, the token register may replace the registration of the registered electronic first-type token by a registration of a generated electronic second-type token.

Upon receiving the partial value request for the registered electronic second-type token, the token register further registers an electronic first-type token having the requested partial monetary value as a monetary value.

In another aspect of the present disclosure there is provided a method for managing of different types of electronic token in an electronic payment transaction system, preferably for reconciliation of electronic second-type tokens as generated by a method as previously described and managed by a secure element of the electronic payment system, each type of electronic token having a monetary value and a private value as two distinct token elements, the method comprising the steps of:
(re-)generating, by the secure element, an electronic first-type token based on an electronic second-type token, wherein its monetary value is identical to the monetary value of a second-type token managed by the secure element;
generating, by the secure element, a token reference for the generated electronic first-type token, wherein this token reference comprises the monetary value of the generated first-type token and a public value as two distinct token reference values; transmitting, by the secure element, the generated token reference to a token register in which a token reference is stored that refers to the electronic second-type token;
comparing a public value of the token reference for the second-type token with the public value of the generated token reference to identify the token reference for the second-type token;
adapting, by the token register, a monetary value of the token reference for the second-type token with reducing, by the token register, the monetary value of the token reference for the second-type token by the monetary value of the token reference for the generated token reference;
storing, in the token register, the generated token reference of the generated electronic first-type token for registering the generated electronic first-type token.

The public value of the generated token reference may be the private value of the second-type token.

The public value may be the result of a Hash-based Message Authentication Code, HMAC, function on the monetary value of the first-type token, the HMAC-function being performed by the token register.

The public value of the generated token reference may be a public key of an asymmetric cryptographic key pair, the private key being the private value of the second-type token and the asymmetric cryptographic key pair being generated by the secure element and/or the token register.

The first-type token may be issued by a central issuer unit of the electronic payment system.

In another aspect of the present disclosure there is a non-transitory computer readable storage medium for tangibly storing computer program instructions capable of being executed by a processor, the computer program instructions defining the steps of one of the preceding methods.

In another aspect of the present disclosure there is an electronic payment transaction, comprising
a plurality of participant secure elements being configured to exchange electronic first-type token and/or electronic second-type token;
at least one central token issuance unit, configured to issue electronic first-type token;
one or more service provider unit having a provisioning secure element configured to provide electronic second-type token to one or more of the plurality of participant secure elements; and optionally
a token register, configured to register first-type token and second-type token, preferably based on corresponding token references.

At least one, multiple or each of the above units of the system may be adapted as described above and/or may have non-transitory computer readable storage medium for tangibly storing computer program instructions capable of being executed by a processor, the computer program instructions defining the steps of one of the preceding methods.

A token "managed by" the secure element is a token that resides in a memory (storage) space managed by the secure element. The memory space can be an internal memory space of the secure element, or it can be an external memory space to which the secure element has exclusive access rights. This memory space can include a remote memory space, such as a cloud memory (storage) space.

A token history value of a first-type token that may be needed in a second-type token is a value of the token history representing at least one or more modifications of this token that are represented as individual history entries in the history data. It is sometimes referred to as a proof of a modification.

None of the methods for managing tokens as described above affect the overall balance represented by tokens in that secure element.

Implementation of modifications to first-type tokens can be performed with the known payment transactions of WO 2020/212 337 A1; WO 2020/212 331 A1; WO 2021 /170 646 A1 and WO 2021 / 170 645 A1 protocols.

A technical implementation of the methods at the secure element can be performed using computer applets, such as agents, running on the secure element. A technical implementation of the described method steps can be the inclusion into the secure element as software agent.

The methods as described above allow that the monetary value of the first-type token remains, but no further history entry is created and so, the second-type token do not gain data size and/or have a data size that is much lesser than the data size of first-type token used in offline payment transaction(s).

A corresponding token reference is associated with each token in the method and payment transaction system. Knowledge of a token reference does not authorize issuance of the digital money represented by the token. This represents a key difference between token references and tokens. A token reference is unique and also uniquely associated with one token, so there is a 1-to-1 relationship between the token and the token reference. The token reference can be computed by each participant, such as a secure element of a participant in the payment system. The computing is preferably performed by a processing unit of the secure element or a terminal in which the secure element may reside.

When issuing a first-type token by an issuing entity of the system (such as a computing entity in a central bank), a token reference may be issued in parallel by the issuing entity of the payment system to the token register to register the first-type token.

The token reference may be obtained by applying a one-way function, for example a homomorphic one-way function or a cryptographic function. This function is a one-way function, i.e., a mathematical function that is "easy" to compute in terms of complexity theory, but "difficult" to practically impossible to reverse. Here under one-way function also a function is designated, to which up to now no inversion practically executable in appropriate time and with justifiable expenditure is known. Thus, the calculation of a token reference from a token is comparable to or equivalent to the generation of a public key in an encryption method via a residue class group. Preferably, a one-way function is used that operates on a group in which the discrete logarithm problem is difficult to solve, such as a cryptographical method analogous to an elliptic curve encryption, or ECC, from a private key of a corresponding cryptographic method. The reverse function, i.e., the generation of the token from the token reference, is thereby - equivalent to the generation of the private key from a public key in an encryption method over a residue class group - very time-consuming.

In one embodiment, the one-way function is homomorphic, i.e., a cryptographical method that has homomorphism properties. Thus, mathematical operations can be performed on the token reference that can also be performed in parallel on the token and thus be traced. Using the homomorphic one-way function, calculations with token references can be traced in the monitoring entity without the corresponding tokens being known there.

In a preferred embodiment, the one-way function is a cryptographical encryption function, e.g., based on an asymmetric or symmetric encryption scheme.

When transmitting a first-type token directly between secure elements, both have knowledge of the token. Preventing a double spending (one secure element sends the token to two different secure elements), a switch operation on the token may be executed. The switch can preferably occur automatically when a first-type token is received. In addition, it may also occur upon request, for example, a command from a secure element.

Switching, splitting, and merging are different modifications to the first-type token. These modifications require registering the token reference in the payment system in case the validity should be proven. However, if online connectivity to the register is not possible or inconvenient, a modification proof can also be attached to the first-type token and must be transferred in case the first-type token is transferred and the first-type token is not registered online beforehand.

In addition, it is advantageous that the tokens can be transmitted in any format. This implies that they can be communicated, i.e. transmitted, on arbitrary channels. They do not have to be stored in a determined format or in a determined program.

A mobile terminal, for example a smartphone, may be used as a terminal to power-up a secure element. The secure element may be a physically attachable/detachable element Alternatively or additionally, the terminal can also be an apparatus, such as a wearable, machine, tool, vending machine or even container or vehicle.

A terminal according to the invention is thus either stationary or mobile. The terminal is preferably adapted to use the internet and/or other public or private networks. For this purpose, the terminal uses a suitable connection technology, for example Bluetooth, LoRa, NFC and/or Wi-Fi, and has at least one corresponding interface. The terminal may also be adapted to be connected to the internet and/or other networks by means of access to a mobile network.

In the following, the invention or further embodiments and advantages of the invention are explained in more detail based on drawings, wherein the drawings describe only embodiments of the invention. Identical components in the drawings are given the same reference signs.

The drawings are not to be regarded as true to scale, and individual elements of the drawings may be shown in exaggeratedly large or exaggeratedly simplified form.
Fig. 1a shows exemplary lifetimes of first-type tokens in online payment transactions according to the prior art.
Fig. 1b shows exemplary lifetimes of first-type tokens in offline payment transactions according to the prior art.
Fig. 2 shows a payment transaction with increasing the history value of first-type tokens according to the prior art.
Fig. 3 shows a payment system according to an exemplary embodiment of the present invention.
Fig. 4 shows an exemplary embodiment of a method diagram illustrating methods of managing tokens of different types in the payment system TS of Fig. 2 according to the present invention.
Fig. 5 shows exemplary lifetimes of first-type tokens and second-type tokens in a payment transaction system according to the present invention.

Fig. 1a, 1b and 2 have been explained in greater details in the opening section of this patent application and it is referred thereto for further studies.

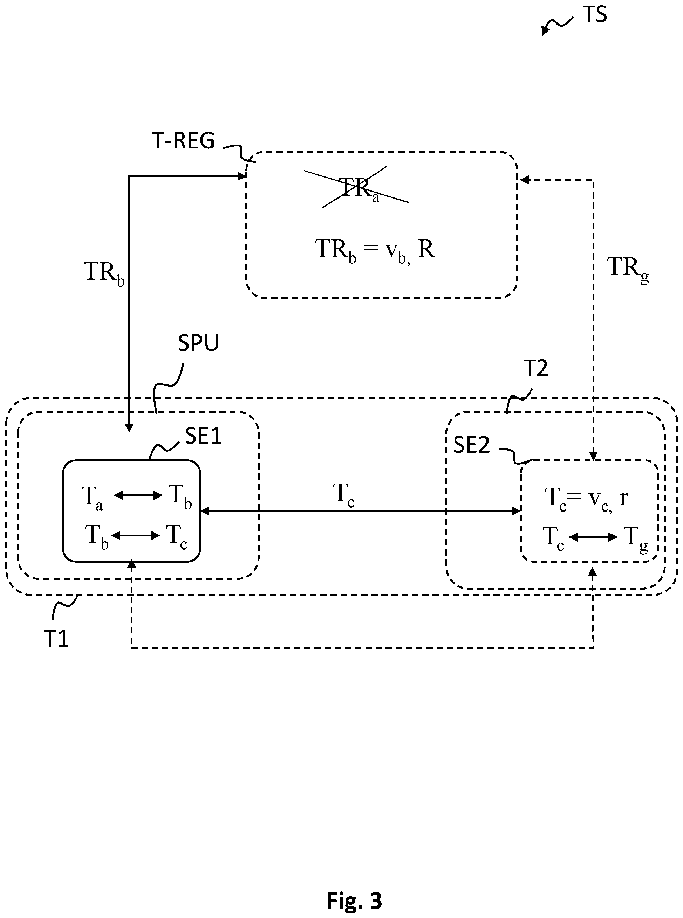

Fig. 3 shows a payment transaction system TS according to an exemplary embodiment of the present invention.

The payment transaction system TS comprises a first secure element SE1 and a second element SE2. SE1 may be part of a service provider unit, SPU, that may e.g. be operated by a financial service provider, FSP.

SE1 and SE2 may also be functionally coupled to a terminal T1. SE2 may alternatively be functionally coupled to a terminal T2.

A functionally coupling between SE1 and/or SE2 may include an attachment or insertion or incorporation of the corresponding SE1, SE2 into one or more of the terminals T1, T2, respectively.

The system TS may also comprise a token register T-REG. The token register T-Reg can be reached via an internet connection and / or a mobile communication, using typical protocols such as HTTP, TCP, IP, UDP and or other suitable communication protocols.

A first very short description of one possible method follows. SE1 provides a second-type token T_{c} to SE2. T_{c} having a monetary value v_{c}. For providing this and further second-type tokens to SEs, SE1 stores at least one first-type token Tₐ, generates a second type token T_{b} based thereon, both having the same monetary value. T_{b} comprises a private token element r, from which a public token element R can be derived. SE1 registers T_{b} in the token register by sending a registration request. T-Reg now e.g. stores the token reference TR_{b} of T_{b}, comprising a public value R and a monetary value v_{b} of T_{b}. SE1 splits the generated second-type token T_{b} into two or more second-type token and provides one of them, T_{c}, to SE2. SE1 keeps the one or more other split second-type token (not shown), for further splitting thereof. SE2 may further split T_{c} in offline transactions with other SEs and/or may regenerate a first-type token T_{g} based on T_{c}. All second-type tokens split based on T_{b} in the SEs, including SE1 or SE2, share the registration of T_{b}. In particular they all comprise the same r as the private token element. SE2 may send a redeem request for T_{c} and T_{g}, both having the monetary value v_{c}, to the register for having a registered first-type token T_{g} available.

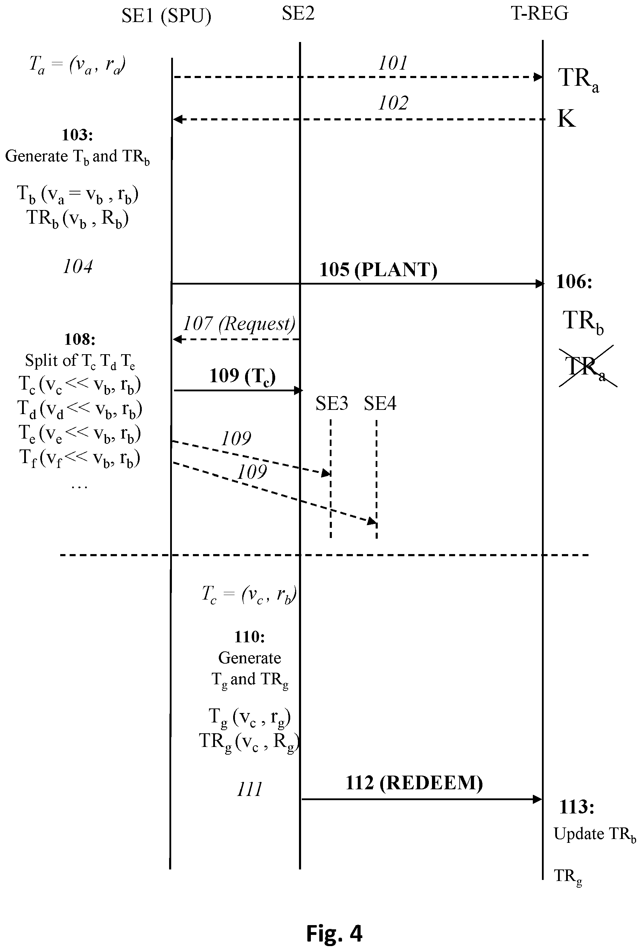

Fig. 4 shows an exemplary embodiment of a method diagram illustrating a method according to the present invention in more detail and/or with other aspects, particularly for providing tokens in a payment system TS of Fig. 3.

It is assumed that SE1 comprises a first-type token Tₐ. It is referred to WO 2020/212 337 A1; WO 2020/212 331 A1; WO 2021 /170 646 A1 and WO 2021 / 170 645 A1 for more details related to the possible structure of such first-type tokens and their corresponding token reference as well as modifications performed at a token, such as SWITCH, SPLIT, MERGE. Each of these modifications may be requested to be registered by sending a replacement request to the token register. The token register may basically replace the registration of registered tokens by the registration of tokens to be registered.

This first-type token Tₐ comprises at least two distinct token elements. A first token element vₐ is a monetary value. This vₐ represents the money that can be transferred with this first-type token Tₐ.

This first-type token Tₐ comprises a second token element rₐ being a private value, e.g. a random number or a private key of an asymmetric cryptographic key pair.

This first-type token Tₐ may be an active (valid) token in the TS. A corresponding token reference TRₐ is stored in the token register T-Reg. The TRₐ may be presented for registration to the T-Reg in an optional step 101.

This first-type token Tₐ may alternatively be not registered in the T-reg. In such a case, a third token element Hₐ being the token history would be necessary in Tₐ. The token history Hₐ could comprise a plurality of token history entries PR₁ to PRₓ representing proofs of modifications made with the token Tₐ. First-type tokens are individually registered and/or comprise their unique private value.

At step 103, the SE1 generates a second-type token T_{b}. The resulting second-type token T_{b} comprises at least two distinct token elements.

A first token element being a monetary value v_{b} that is equal to the monetary value vₐ of the first-type token Tₐ, so that during this step 102 no additional money is created and no money is destroyed.

This second-type token T_{b} comprises a second token element r_{b} being a private value.

This private value r_{b} may be a random number generated by the SE1, e.g. by means of a true random generator of the SE1.

This private value r_{b} may be a private key of an asymmetric key pair generated by the SE1, e.g. by means of a cryptographic processor.

This private value r_{b} may be the result of a HMAC function on the monetary value v_{b}, e.g., performed by means of a cryptographic processor of the SE1. A necessary cryptographic key K for performing the HMAC-function may be obtained from the T-REG in optional step 102, prior or during the generating step 103.

During the generating step 103, SE1 also generates a token reference TR_{b} for registering the second-type token T_{b} in the T-REG. This token reference TR_{b} is also referred to as planted note and it comprises two distinct token reference elements.

A first token reference element of the token reference TR_{b} is the monetary value v_{b} of the token T_{b} that is equal to the monetary value vₐ of the first-type token Tₐ.

A second token reference element of the token reference TR_{b} is a public value R_{b}.

This public value R_{b} may be a random number generated by the SE1, e.g. by means of a true random generator. The public value R_{b} may be identical to the private value r_{b}.

This public value R_{b} may be a public key of an asymmetric key pair generated by the SE1, e.g. by means of a cryptographic processor of the SE1. The corresponding private key may be the private value r_{b} of the second-type token T_{b}.

This public value R_{b} may be the result of a HMAC function on the monetary value v_{b}, e.g., performed by means of a cryptographic processor of the SE1. A necessary cryptographic key K for performing the HMAC-function may be obtained from the T-REG in optional step 102, prior or during the generating step 103.

In optional step 104, the generated planted note TR_{b} (token reference of the second-type token T_{b}) is signed with the private value rₐ of the first-type token Tₐ. Using this signature allows the T-Reg to identify that TR_{b} is based on the corresponding token reference TRₐ.

In step 105, the generated planted note TR_{b} (token reference of the second-type token T_{b}) is send from the SE1 to the T-Reg for registration of the T_{b}.

Steps 103 to 105 can be part of a designated command performed by the SE1. This command is herein referred to as PLANT command. An input parameter for this PLANT command is the first-type token Tₐ (also referred to as value note) and the output parameter to be transferred to the T-Reg is the token reference of the second-type token, also referred to as planted note, TR_{b}. Such a PLANT command may be compared to a SWITCH command, which is a known modification to a first-type token for switching ownership of a first-type token. The difference between a SWITCH and a PLANT command may be seen as that after the PLANT command, the T-REG obtains the additional hint that the T-reg must observe ("track") the denomination v_{b} in case a REDEEM command (explained below) is received in the T-Reg, and the T-reg needs to adapt the monetary value by decreasing the value until the monetary value vb of the planted note is zero. A PLANT command send to the register also indicates that a second-type token was generated and could be called a second-type token generation request.

In step 106, the T-reg registers the planted note TR_{b} and de-registers the TRₐ. This may be done by checking the signature of the planted note TR_{b} that is inserted in step 104.

After registering TR_{b} T-reg now observes REDEEM commands (explained below) to adapt the monetary value of TR_{b}.

In optional step 107, the SE2 may request second-type token from SE1. This step 107 can be performed also at an earlier stage, e.g. prior step 102 or 103, so that SE1 is initiated to generate second-type tokens T_{b} only upon request.

This step 107 may occur if the SE1 is a financial service provider, FSP, such as a bank in which an owner of SE2 has a bank account so that the monetary value v_{c} may be balanced from that bank account.

This step 107 may alternatively occurs if SE2 as a payee requests payment in the amount of the monetary value v_{c} in a payment transaction between SE1 and SE2.

In step 108, the SE1 may now split of a second-type token T_{c} from the second-type token T_{b}. The split second-type token T_{c} may be called root note hereinafter. T_{c} has a monetary value v_{c} that is much lesser than the monetary amount v_{b}. The second-type token T_{c} has a private value r_{b} being the (same) private value from the second-type token T_{b}. All root notes T_{c} T_{d} Tₑ T_{f} comprise the same private value r_{b} necessary for an easy reconciliation (redeem) requested by the T-reg. None of the root notes T_{c} T_{d} Tₑ T_{f} has a history entry referring to the generation step 103 or the splitting-off step 108.

In step 109, the token T_{c} is sent from SE1 to SE2. Similarly further tokens may be sent to SE3, SE4 and so on. The number of root notes T_{c} T_{d} Tₑ T_{f} is not limited; however it must be assured that the sum of the monetary values v of all second-type tokens (root notes split from one generated token T_{b}), here T_{c} - T_{f}, must be equal to the monetary value vₐ = v_{b} of that generated token T_{b} (or the value note (first-type token) Tₐ). Each of the root notes T_{c} - T_{f} may now be used in offline or online payment transactions between SEs in the TS.

These tokens T_{c} - T_{f} can be further merged or split for follow up payment transactions without the need to include proofs for these modifications. Whenever SEs make payment transaction, the monetary value v_{c} - v_{f} of the respective token T_{c} - T_{f} is either increased or decreased.

In other words: There is a 1 : n relationship between plant notes (TR_{b}) and root notes. One plant note is corresponding to n root notes circulating in offline payment transactions within the TS.

At some point (illustrated by the dashed-line in Fig. 4), SE2 may decide to reconcile a second-type token, here token T_{c}.

To identify which root note (one or more of the tokens T_{c} - T_{f}) correspond to which planted note TR_{b} is noted in the private value r_{b} of each root note.

In a first approach, a symmetrical mapping is used, which means that the private value in the second-type token (the root notes) is identical to the public value of the token reference in the T-Reg (the planted note), which is achieved when r = R is the same random number or the same result of the HMAC-function. For such a symmetric mapping, the T-reg (in contrast to the known payment systems) contains confidential information that needs to be protected. In addition, the data communication to the T-reg becomes confidential and needs to be encrypted, e.g. using a secure SCP channel and the data transported via the SCP channel may be encrypted by the private key of a SE certificate.

In a second approach, an asymmetrical mapping is used, which means that the private value in the second-type token (the root notes) is not identical (not the same) to the public value of the token reference in the T-Reg (the planted note). For example, a cryptographic key pair may be generated (by SE1 or the T-Reg) having a public key that is used as the public value in the token reference (the planted note) and having a private key that is used as the private value in the second-type token (the root notes). In this second approach, the T-Reg only contains public information (public key as public value) and can remain unprotected. The communication can be plain (not encrypted).

In both approaches, the private value r of the second-type token may be protected to avoid that an attacker can read this private value r and then may fraudulently spend offline money. Whenever root notes are transferred between SEs, the public key of a receiving SE certificate may be used to encrypt the private value r. Additionally or alternatively, root notes may not be stored plainly on a memory of a SE - instead, root notes may be XORed with SE individual bitstrings.

If a root note (second-type note) T_{c} should be redeemed (reconciled, retransformed), it needs to be transformed from a second-type token to a first-type token (value note) T_{g}. In step 110, a first-type token T_{g} is generated and a corresponding token reference TR_{g} is generated and in step 112, a registration of TR_{g} is requested.

Steps 110 to 112 can be part of a designated command, here performed by the SE2. This command is herein referred to as REDEEM command. Input parameter for this REDEEM command is the second-type token T_{c} (also referred to as root note). It is possible to combine a plurality of root notes in this REDEEM command in case, they are originated from the same value note. The output parameter of the REDEEM command is pair consisting of one value note (first-type token) T_{g} and a corresponding token reference TR_{g}. This REDEEM command is sent to the T-REG in step 112.

In step 113, the T-Reg updates the monetary value v_{b} of the respective planted note TR_{b} by reducing the value v_{b} by the value v_{c} (of the token reference TR_{g}) and registers the token reference (note anchor) TR_{g}. The SE2 now comprises a registered first-type token T_{g}. It is again referred to WO 2020/212 337 A1; WO 2020/212 331 A1; WO 2021 /170 646 A1 and WO 2021 / 170 645 A1 for more details related to the structure of such first-type tokens and their corresponding token reference as well as modifications performed at a token, such as SWITCH, SPLIT, MERGE that can now be performed with T_{g}.

After a finite amount of time, all root notes are reconciled and the planted note TR_{b} is completely consumed. This results in a monetary value v_{b} of the planted note TR_{b} being zero. The T-reg recognizes this value v_{b} = 0 and deregisters the TR_{b} from the T-reg (marking as "inactive"). In any case, the faster a planted note in the T-REG can be marked "inactive", the lower fraud gain of possible attackers.

The fewer root notes in an SE, the better the performance and memory considerations of that SE.

Besides using the second-type tokens exclusively for offline transactions a further advantageous use case could be smart contracts. In smart contracts, typically managed by a trusted party/service provider, one or more electronic tokens may be embedded for transfer, if an event/condition is met. If a second-type token, providing a simplified splitting, is used in a smart contract, the flexibility of the contract increases/complexity of the contract management decreases. In examples SE1 is the secure element of a smart contract service provider and/or either SE1 or SE2 incorporate the received second-type token into a smart contract.

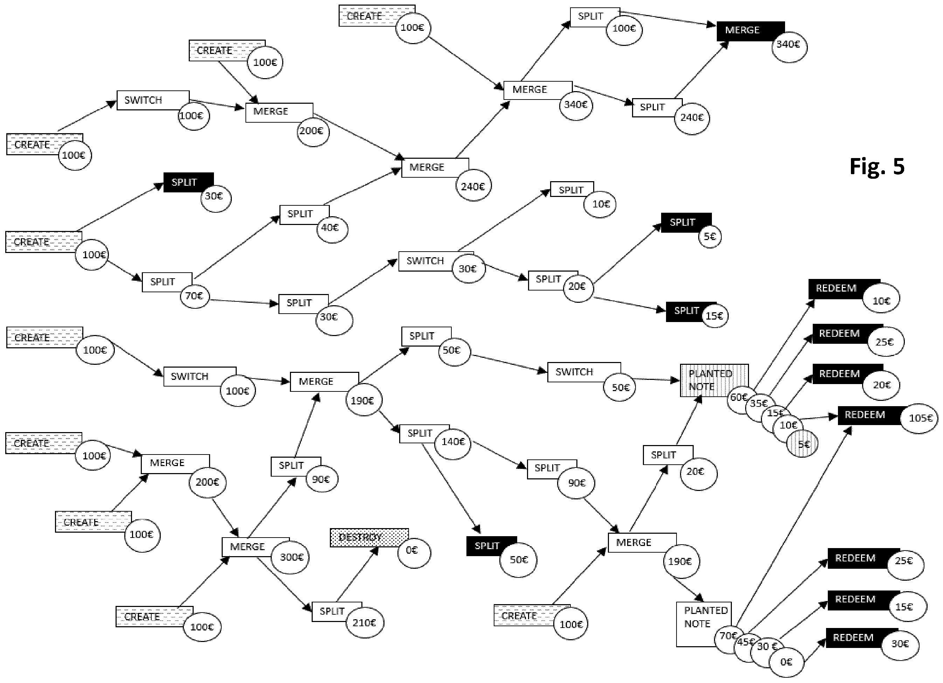

Fig. 5 shows exemplary lifetimes of first-type tokens and second-type tokens in a payment transaction system according to the present invention. This Fig. 5 uses the same lifetimes as shown in Fig. 1a with the exception that two planted notes are provided which is a representation of using second-type token instead of using first-type token in an offline scenario with additional proofs.

As can be derived from Fig. 5, the monetary value of the planted note is decreased with every REDEEM request send from a SE to the T-Reg. The lower "planted note" in Fig. 5 has a resulting monetary value of "0€" which means that this "planted note" is already inactive in the T-Reg (planted note is not filled), whereas the upper "planted note" has a monetary value of 5€ which means that this "planted note" is still active (planted note is filled with vertically aligned lines) and at least one SE can send a REDEEM command here. As will be shown in the following, the

As indirectly shown in Fig. 5, it is now possible that the T-Reg registers more than one planted note.

An offline payment transaction is thus performed mainly (or exclusively) using root notes. So, history entries on first-type tokens can be avoided.

As a further token element, the second-type token may have a short-ID value, which is an identification value. Each second-type token originated from the same first-type token will have the same short-ID. So, it is possible, that only one root node of one first-type token is managed in each SE. After a payment transaction, the monetary value of a root note can be easily updated when comparing the short-ID value. When receiving a transaction with a short-ID value (also referred to as root identifier), it can be easily identified that other root nodes with identical short-ID values may be managed by this particular SE and so, a received monetary value may simply be added to the already existing root node.

However, existing root notes in SE1 (payer) and SE2 (payee), e.g. sender and receiver needs to be negotiated, because monetary values can only be summed (added) if the private value r in the root notes is the same.

In more detail when considering the first approach (symmetrical mapping):
For example, a SE has a root note (r, v=10) and receives another root node (r, v=20). In this case an adding of monetary values is possible because the private values are identical (r = r) and the resulting root note after the payment transaction will be root note (r, 30).

But, for example a SE has a root note (r, v=10) and receives another root node (s, v=20). In this case an adding of monetary values is not possible because the private values are different (r is not s). In this case, both root notes (r, v=10) and (s, v=20) must be separately stored in the SE.

In more detail when considering the second approach (asymmetrical mapping):
For example, a SE has a root note (r, v=10, sig(10)) and receives another root node (r, v=20, (sig(20)). In this case an adding of monetary values is possible because the private values are identical (r = r) and the resulting root note after the payment transaction will be root note (r, 30, sig(30)).

But, for example a SE has a root note (r, v=10, sig(10)) and receives another root node (s, v=20, sig(20)). In this case an adding of monetary values is not possible because the private values are different (r is not s). In this case, both root notes (r, v=10, sig(10)) and (s, v=20, sig(20)) must be separately stored in the SE.

One more complex example for the first approach (symmetrical mapping):
SE1 tops up its root storage from a hosted wallet in an FSP. For instance, SE1 receive a root note with private value r and monetary value v = 10. The SE1 then has a root storage containing the root note (r, v = 10).
SE1 wants to pay an amount of v = 4 to SE2 and therefore transmit the root note (r, v = 4) to SE2. The SE1 updates the root storage to be (r, v = 6). The SE2 updates its root storage to be (r, v = 4).
SE3 tops up its root storage from a hosted wallet in an FSP and may receive a root note with private value q and monetary value v = 20. The SE3 then has a root storage (q, v = 20).
SE3 wants to pay an amount of v = 8 to SE2 and therefore transmit the root note (q, v = 8) to SE2. SE2 cannot add the root notes and so, SE2 updates its root storage and now has two distinct root notes, namely (r, v = 4) from SE1 and (q, v = 8) from SE3.
SE3 now wants to pay an amount of v = 3 to SE1. SE 1 and SE3 may start a negotiation to identify, which root notes should be used for the payment transaction. During negotiating it is observed that both SE1 and SE3 have root notes with private value 1 and so, SE3 sends a root note with private value r and monetary value v= 3. The SE1 updates its root storage to (r, v = 9).

The root note negotiation algorithm can be further improved. There are multiple relevant aspects, namely to minimize the amount of data to be transferred; to minimize the amount of computation required on SEs side; to minimize the total number of root notes in circulation; a potential leakage of one specific root note through side channel attacks.

As an enhanced example, SE4 wants to pay the monetary value v = 6 to SE5.

SE4 has five different root notes: (a, v = 5), (b, v = 8), (c, v = 3), (d, v = 7), (e, v = 9)

SE5 also has five different root notes: (c, v = 5), (t, v = 8), (u, v = 3), (a, v = 4), (m, v = 9)

SE4 should send root note (a, v = 5) and root note (c, v = 1) to SE5 and the negotiating algorithm in SE4 is dependent on the root-notes present in SE4.

In this enhanced example, as a first step in the negotiating algorithm, SE4 sends a hash-list of all root-notes. As a second step in the negotiating algorithm SE5 responds to the first step a matching hash-list of root-notes. As a third step, SE4 chooses matching root-notes.

During negotiation it may be useful to search for common token elements in the root notes, such as common area code values, a short-ID value, a time validity and /or hash values of the root nodes, in order to keep the negotiating phase simple and with less amount of data to be transferred in this phase.

The root notes can contain further token elements. For instance, an area code is used as another token element in the root notes to ensure that tokens are only exchanged within a specific geographic region (which is represented by appropriate area code data, such as GPS data or an area identification code). Thus, root notes may become exchangeable only in small areas, such as a village or a district in a town. The area code of received root notes may be stored in an area code ring buffer of the SE. The next buffer is used upon each receipt of root notes from a FSP (so-called top-up). By reading the buffer, the area code for which the top-up should occur is determined even though no root notes or no such root notes exist on the SE anymore. So, an automatic redeeming is achieved and the validity of root notes is further restricted and limited.

In another approach, a generation value (such as a time value) is used to identify roots that must be redeemed automatically. For example, if one root note of generation x exists on the SE, all notes of generations smaller than this generation x are automatically redeemed.

In another aspect of the invention - which is not illustrated in the drawings, it is possible that the SE generates a second-type token directly from a first-type token by changing a type-data of first-type token only. A type-data may represent the type of token and a first type data may be used as a token element for identifying the token as first-type token, whereas a second type data may be used as a token element for identifying the token as second-type token. The SE may have exclusive access rights to change (switch) the type data only to generate the second-type token. This approach enables that upon generation of the second-type token, the corresponding first-type token (origin for the second-type token) is not present anymore and cannot be used by the SE in future payment transaction.

So, the TS uses the herein described PLANT and REDEEM commands in offline payment transactions, so that the SEs stores and forward root notes (second-type token) and the T-Reg registers the corresponding token reference of the second-type token (the planted note) as described above either in asymmetric or symmetric mapping.

The TS further uses the classical first-type token in online payment transactions managed by the SE and stores corresponding token references in the T-reg as known from the prior art

An example for this other aspect that can easily combine online and offline payment transactions will be described in the following:
SE6 stores first-type token (r1, v = 30) with the type data "VN", that classifies the token type as a value note, VN, being a first-type token. The token stored in SE6 is thus structured (r1, v = 30, VN). The T-Reg stores a corresponding anchor note (token reference (R1, v = 30).
SE7 stores second-type token (r2, v = 15) with the type data "RN", that classifies the token type as a root note, RN, being a second-type token. The token stored in SE7 is thus structured (r2, v = 15, RN).
SE6 now wants to transfer monetary value v = 10 to SE7. However, since SE6 and SE7 are both offline and since SE6 does not have root notes, SE6 generates a root note by changing the type-data from VN to RN. The token now stored in SE6 is thus structured (r1, v = 30, RN).
SE6 can now transfer the stored token r1, v = 10, RN to SE7 in accordance with the method as described in Fig. 4 and SE6 keeps a token structured as r1, v = 20, RN.
SE7 receives and stores the token from SE6 and now has a root storage with two second-type token, namely (r1, v = 10, RN) and (r2, v = 15, RN)
SE6 and/or SE7 may now send REDEEM command(s) to the T-Reg. T-Reg still has the token reference (anchor note) (R1, v = 30) stored. After a REDEEM command, e.g. send by SE7 that sends the command REDEEM (r1, v = 10), T-Reg identifies that the token reference (anchor note) is now a plant note. T-Reg inactivates the stored token reference (R1, v = 30) (or deletes it) and stores (R1, v = 20) as a plant note.

The T-Reg may use different structures, such as tables or databases, to register anchor notes and plant notes.

A root note is characterized in that it does not comprise history data as a further token element. However, it may be necessary that the second-type token comprises the history data of the first-type token from which the second-type token is generated from so that the T-Reg can identify the token references (anchor notes) that need to be switched to planted notes.

In any case, during direct electronic payment transactions between secure elements, either in an offline electronic payment transaction or in an online electronic payment transaction, a further modification (merge, split) of a second-type token is not recorded as a history date entry in the second-type token and so, the data size of a second-type token is not increased throughout the payment transaction in which this second-type token is used.

### REFERENCE SIGNS

- TS: electronic transaction system
- SE: Secure element
- Tₐ, T_{g}: first-type token
- Tb: second-type token
- TRₐ: token reference for first-type token
- TR_{b}: token reference for second-type token
- vₐ,vb: monetary value of token
- r: private value of token, e.g. private asymmetric key
- R: public value of token reference, e.g. public asymmetric key
- T-Reg: token register
- SPU: Service Provider Unit
- T1, T2: terminal, external storage
- PRₓ: history entry, proof of token modification
- H: token history
- K: cryptographic symmetric key for HMAC

- 101: register first-type token
- 102: Receive symmetric key K
- 103: generate second-type token
- 104: signing
- 105: send PLANT command (token reference of second-type token)
- 106: register second-type token, deregister first-type token
- 107: Request root notes
- 108: split-of root notes
- 109: send root note(s)
- 110: generate pair of first-type token and token reference
- 111: signing
- 112: send REDEEM command (token reference of first-type token)
- 113: update monetary value of second-type token and register token reference

## Claims

1. A method performed in a first secure element (SE1) of an electronic payment transaction system (TS), comprising the steps of:
splitting (108), by the first secure element (SE1), an electronic token (T_{b}) having a monetary value into two or more electronic tokens (T_{c} ... T_{f}),
wherein the monetary value (v_{b}) of the electronic token (T_{b}) is equal to the sum of monetary values (v_{c} ... v_{f}) of the two or more electronic tokens (T_{c} ... T_{f});
sending (109), by the first secure element (SE1), one of the two or more tokens (T_{c} ... T_{f}) to a second secure element (SE2) of the electronic payment transaction system (TS); **characterized by**
generating (103), by the first secure element (SE1), an electronic second-type token (T_{b}) based on an electronic first-type token (Tₐ),
wherein the electronic first-type token (Tₐ) is managed by the first secure element (SE1) and is ready-to-be-used in the electronic payment transaction system (TS), and
wherein the monetary value (v_{b}) of the generated electronic second-type token (T_{b}) is equal to the monetary value (vₐ) of the electronic first-type token (Tₐ); and
wherein, in the step of splitting (108), the generated electronic second-type token (T_{b}) is split into two or more electronic second-type tokens (T_{c} ... T_{f}).

2. The method of claim 1, wherein
electronic second-type tokens comprise a private value (r) and a monetary value (v), the generated second-type token (T_{b}) and the split electronic second-type tokens (T_{c} ... T_{f}) include the same shared private value (r_{b}); and/or
electronic first-type tokens comprise a private value (r) and a monetary value (v),
wherein a first-type token includes an unique private value (rₐ).

3. The method of claim 1 or 2, wherein
the first secure element (SE1) provides (105) a registration request for registering the generated electronic second-type token (T_{b}) in a token register (T-Reg) of the transaction system (TS); and/or
the split electronic second-type tokens (T_{c} ... T_{f}) share a common registration in the token register (T-Reg) of the transaction system (TS); and/or
electronic first-type tokens (Tₐ) are individually registered in the token register (T-Reg) of the transaction system (TS).

4. The method of one of the preceding claims,
wherein the split electronic second-type tokens (T_{c} ... T_{f}) correspond to copies of the generated electronic second-type token (T_{b}) each having a respectively split monetary value; and/or
. wherein split electronic first-type tokens comprise generated individual data and/or additional data as well as a respectively split monetary value.

5. The method of one of the preceding claims,
wherein electronic second-type tokens are dedicated for use in only one or two specific use cases, particularly for offline transactions and/or smart contracts, more preferably by using the one or more second-type token (T_{b} ... T_{f}) exclusively in one or more offline transactions within the electronic payment transaction system (TS); and/or
wherein electronic first-type tokens can be used in online and offline electronic payment transactions in the transaction system (TS).

6. The method of one of the preceding claims, wherein
the number of electronic second-type tokens (T_{b}) generated by the first secure element (SE1) per year is below 100, preferably below 20, most preferably below 10; and/or
the number of split electronic second-type tokens sharing a common registration is above 500, preferably above 1000, most preferably above 2000; and/or
the monetary value of the electronic second-type token (T_{c}) send to the second secure element (SE2) is less than 1/500, preferably less than 1/1000, most preferably less than 1/2000, of the monetary value of the generated electronic second-type token (T_{b}).

7. The method of one of the preceding claims, wherein each generated second-type token (T_{b} ... T_{f}) comprises an area code data as a further token element, wherein the area code data represents one predefined geographic region of the electronic payment transaction system (TS),
wherein preferably each electronic second-type token (T_{b} ... T_{f}) further comprises a time data as further token element, wherein an automated transmitting of the electronic second-type token (T_{b} ... T_{f}) to the service provider unit (SPU) is initiable based on the time data and/or the area code data.

8. The method of one of the preceding claims, wherein the electronic second-type token (T_{b} ... T_{f}) comprises a private value (r) of a token element pair and wherein a token reference (TR) stored in a token register (T-Reg) comprises a public value (R) of the token element pair, wherein preferably
the private value (r) is a private key of a cryptographic key pair and a public value (R) of a token reference (TR) stored in the token register (T-Reg) is the corresponding public key of the cryptographic key pair, the cryptographic key pair being generated by the first secure element (SE1) and/or the token register (T-Reg); or
the private value (r) is identical with the public value (R) and is the result of a Hash-based Message Authentication Code, HMAC, function on the monetary value (vₐ) of the electronic first-type token (Tₐ).

9. Secure element (SE1) for providing electronic second-type tokens (T_{b}), wherein
the secure element (SE1) comprises an electronic first-type token (Tₐ) having a monetary value,
the secure element (SE1) for providing to a second secure element (SE2) an electronic second-type token (T_{d}) having a defined monetary value is configured to:
generate (103) an electronic second-type token (T_{b}) based on the electronic first-type token (Tₐ), wherein the monetary value (v_{b}) of the generated electronic second-type token (T_{b}) is equal to the monetary value (vₐ) of the electronic first-type token (Tₐ);
split (108) the generated electronic second-type token (T_{b}) into two or more electronic second-type tokens (T_{c} ... T_{f}), a split electronic second-type token (T_{c}) of the split electronic second-type tokens (T_{c} ... T_{f}) having the defined monetary value; and
send (109) to the second secure element (SE2) the split electronic second-type token (T_{c}) having the defined monetary value.

10. The secure element (SE1) of claim 9,
wherein the secure element (SE1) is a provisioning secure element of a service provider unit (SPU) in the transaction system (TS), and preferably the second secure element (SE) is a secure element (SE) of a participant of the transaction system (TS); and/ or
wherein the secure element (SE1) in subsequent steps uses a previously split electronic second-type token to provide electronic second-type tokens to further secure elements (SE3, SE4) of the transaction system (TS), by respectively splitting (108) the previously split electronic second-type token (T_{d}) and sending (109) the further split electronic second-type token (Tₑ) to a further secure element (SE3); and/or
the secure element (SE1) being configured in accordance with the features of one of claims 1 to 8.

11. Secure element (SE2) for exchanging electronic second-type tokens, the secure element (SE2) being configured for
splitting (108) one second-type token (T_{b}) into two or more second-type tokens (T_{c} ... T_{f}), wherein the private values (r) in the two or more second-type tokens (T_{c} ... T_{f}) are identical to the private value (r_{b}) of the second-type token(T_{b}), or
merging the one or more second-type token (T_{b} ... T_{f}) with another second-type token managed by the secure element (SE3) and having an identical private value (r) into a merged second-type token; and
transmitting (109), by the secure element (SE2), the split or merged second-type token (T_{b} ... T_{f}) to a second secure element (SE3).

12. The secure element (SE2) of claim 11, wherein upon receiving an electronic second-type token (T_{b} ... T_{f}) in the secure element (SE2), the second secure element (SE2) compares the private value (r) of the electronic second-type token (T_{b} ... T_{f}) with private value (r) of electronic second type token elements managed by the second secure element (SE2), wherein if the private values (r) are identical, in the step of merging the monetary value (v) of the received electronic second-type token (T_{b} ... T_{f}) is added to the monetary value (v) of the electronic second-type token managed by the second secure element (SE2).

13. The secure element of claims 11 or 12, wherein a negotiation step between the secure element (SE2) and the second secure element (SE3) is performed to identify whether each of the secure element (SE2) and the second secure element (SE3) comprise one or more second-type token (T_{b} ... T_{f}) having at least one identical token element, wherein a token element preferably is one or more of the following items:
- a private value (r);
- an area code data;
- a time data; and/or
- a short-ID data.

14. Token register (T-Reg) for registering tokens of an electronic payment transaction system (TS),
wherein the token register (T-Reg) registers electronic first-type tokens (Tₐ) and electronic second-type tokens (T_{b}) of the electronic payment transaction system (TS) ;
wherein the token register (T-Reg) for a registered token (TR) stores a monetary value (v);
wherein for a registered electronic first-type token (TRₐ) the token register only accepts full value requests, the full value request including the monetary value of the registered electronic first-type token (TRₐ); and
wherein for a registered electronic second-type token (TR_{b}) the token register accepts a partial value request, the partial value request including a requested partial monetary value, and the token register reduces the monetary value of the registered electronic second-type token (TR_{b}) by the requested partial monetary value.

15. The token register (T-Reg) of claim 14, further configured to:
upon receiving a first-type token replacement request for a registered electronic first-type token (TRₐ), being a full value request, the token register (T-Reg) replaces the registration of the registered electronic first-type token (TRₐ) by a registration of one or more requested electronic first-type token; and/or
upon receiving a second-type token generation request for a registered electronic first-type token (TRₐ), being a full value request, the token register (T-Reg) replaces the registration of the registered electronic first-type token (TRₐ) by a registration of a generated electronic second-type token; and/or
upon receiving the partial value request for the registered electronic second-type token (TR_{b}), the token register (T-Reg) further registers an electronic first-type token (T_{g}) having the requested partial monetary value as a monetary value.

16. An electronic payment transaction system (TS) comprising:
a plurality of participant secure elements (SE) being configured to exchange electronic first-type token and/or electronic second-type token;
at least one central token issuance unit, configured to issue electronic first-type token;
one or more service provider unit (SPU) having a provisioning secure element (SE1) configured to provide electronic second-type token (T_{b} ... T_{f}) to one or more of the plurality of participant secure elements (SE); and
a token register (T-Reg), configured to register first-type token (Tₐ) and second-type token (T_{b}), preferably based on corresponding token references (TRₐ, TR_{b});
wherein preferably the provisioning secure element (SE1) is a secure element according to claim 9 or 10 and/or the participant secure elements (SE) is a secure element according to one of claims 11 to 13 and/or the token register (T-Reg) is a token register according to claim 14 or 15.
